# EUROPÄISCHE PATENTANMELDUNG

(11) **EP 3 954 494 A1**
(43) Veröffentlichungstag der Anmeldung: **16.02.2022**
(21) Anmeldenummer: 21185991.3
(22) Anmeldetag: 16.07.2021
(51) Int. Cl.: B23K 26/082, B23K 26/08

(54) **BEARBEITUNGSVORRICHTUNG UND VERFAHREN ZUM BEARBEITEN EINES MATERIALS**

(30) Priorität: 17.07.2020 DE 102020118973
(71) Anmelder: Volkswagen Aktiengesellschaft, 38440 Wolfsburg (DE)
(72) Erfinder: Rathmann, Sven, 38108 Braunschweig (DE); Breuer, Alexander, 29227 Celle (DE); Böhm, Dennis, 38302 Wolfenbüttel (DE)
(74) Vertreter: Kreuels, Justus

(57) **Zusammenfassung**

Bearbeitungsvorrichtung (1), zum Bearbeiten eines Materials (2) mit einem fokussierten Strahlmittel (3), zumindest umfassend eine Strahlmittelquelle (4) zur Erzeugung des Strahlmittels (3) sowie eine Fördereinrichtung (5) für das Material (2), oder zusätzlich ein Umlenkmittel (6) zur Umlenkung des von der Strahlmittelquelle (4) ausgesendeten Strahlmittels (3) hin zum Material (2); wobei die Fördereinrichtung (5) gegenüber der Strahlmittelquelle (4) oder dem Umlenkmittel (6) so angeordnet ist, dass das Material (2), zumindest mit einem durch das Strahlmittel (3) zu bearbeitenden Bereich (7), durch die Fördereinrichtung (5) gegenüber der Strahlmittelquelle (4) oder dem Umlenkmittel (6) auf einer Kreisbahn (8) angeordnet ist, so dass das Material (2), bei Bewegung der Strahlmittelquelle (4) oder des Umlenkmittels (6), entlang der Kreisbahn (8) mit einer konstanten Fokuslage (9) des Strahlmittels (3) bearbeitbar ist.

Verfahren zum Bearbeiten eines Materials (2) mit einem fokussierten Strahlmittel (3) in einer Bearbeitungsvorrichtung (1).

## Beschreibung

Die Erfindung betrifft eine Bearbeitungsvorrichtung und ein Verfahren zum Bearbeiten eines Materials mit einer Bearbeitungsvorrichtung. Die Bearbeitung erfolgt mit einem fokussierten Strahlmittel. Die Bearbeitungsvorrichtung umfasst zumindest eine Strahlmittelquelle zur Erzeugung des Strahlmittels sowie eine Fördereinrichtung für das Material, oder zusätzlich ein Umlenkmittel zur Umlenkung des von der Strahlmittelquelle ausgesendeten Strahlmittels hin zum Material.

Für den Antrieb von Kraftfahrzeugen werden vermehrt Batterien, insbesondere Lithium-Ionen-Batterien eingesetzt. Batterien werden üblicherweise aus Zellen zusammengesetzt, wobei jede Zelle einen Stapel von Anoden-, Kathoden- und Separator-Blättern aufweist. Die Anoden- und Kathoden-Blätter werden im Folgenden als Elektrodenblätter bezeichnet.

Die Elektrodenblätter werden üblicherweise durch Stanzen oder Schneiden, z. B. Laserschneiden, hergestellt.

Insbesondere beim Schneiden können hohe Prozessgeschwindigkeiten bei der Herstellung der Elektrodenblätter von einem Endlosmaterial (Coil) erreicht werden.

Zur Erzeugung insbesondere transversaler Schnitte, also quer zu einer Förderrichtung des Endlosmaterials, mittels Laserschneiden ist die Laserstrahlquelle bzw. das für die Umlenkung des Laserstrahls eingesetzte Umlenkmittel gegenüber der Fördereinrichtung zu bewegen. Zur Erzeugung möglichst rechtwinkliger Schnittkanten ist zumindest eine zwei-Achsen-Bewegung parallel zur Förderebene des Endlosmaterials erforderlich. Dabei muss die Laserstrahlquelle bzw. das Umlenkmittel nach jedem Bearbeitungsschritt auf eine Ausgangsposition zurückgefahren werden,

Aus der DE 37 07 665 A1 sind ein Verfahren und Vorrichtung zum Aufspalten von Leder mittels eines Laserstrahls bekannt.

Aus der CN 2774693 Y ist eine Vorrichtung zum Laserschneiden bekannt, bei der ein Laserstrahl über ein Polygon-artiges Umlenkmittel auf ein Material umgelenkt wird.

Aufgabe der vorliegenden Erfindung ist es, die mit Bezug auf den Stand der Technik angeführten Probleme zumindest teilweise zu lösen. Insbesondere soll eine Bearbeitungsvorrichtung und ein Verfahren zum Bearbeiten eines Materials mit einer Bearbeitungsvorrichtung vorgeschlagen werden. Dabei soll eine hohe Prozessgeschwindigkeit und insbesondere rechtwinklige Schnittkanten beim Schneiden von Material ermöglicht werden.

Zur Lösung dieser Aufgaben trägt eine Bearbeitungsvorrichtung mit den Merkmalen gemäß Patentanspruch 1 sowie ein Verfahren gemäß Patentanspruch 7 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Bearbeitungsvorrichtung zum Bearbeiten eines Materials mit einem fokussierten Strahlmittel vorgeschlagen. Die Bearbeitungsvorrichtung umfasst zumindest eine Strahlmittelquelle zur Erzeugung des Strahlmittels sowie eine Fördereinrichtung für das Material. Zusätzlich kann die Bearbeitungsvorrichtung ein Umlenkmittel zur Umlenkung des von der Strahlmittelquelle ausgesendeten Strahlmittels hin zum Material umfassen. Die Fördereinrichtung ist gegenüber der Strahlmittelquelle oder dem Umlenkmittel so angeordnet, dass das Material, zumindest mit einem durch das Strahlmittel zu bearbeitendem Bereich, durch die Fördereinrichtung gegenüber der Strahlmittelquelle oder dem Umlenkmittel auf einer Kreisbahn angeordnet ist. Damit ist das Material, bei Bewegung der Strahlmittelquelle oder des Umlenkmittels, entlang der Kreisbahn mit einer konstanten Fokuslage des Strahlmittels bearbeitbar.

Das Strahlmittel ist insbesondere ein Laserstrahl. Das Strahlmittel weist zur Bearbeitung des Materials insbesondere eine Fokuslage, also eine vorbestimmte Lage des Fokus gegenüber dem Material, auf. Zur Sicherstellung einer möglichsten konstanten Schnittqualität ist die Fokuslage entlang mindestens eines Schnittverlaufs möglichst gleichmäßig aufrechtzuerhalten bzw. einzustellen.

Als Material wird insbesondere ein Endlosmaterial eingesetzt, aus dem mit der Bearbeitungsvorrichtung Elektrodenblätter herausgeschnitten werden.

Eine Fokussierung des Strahlmittels kann bei einem Laserstrahl z. B. durch eine optische Fokussierung, z. B. mittels einer Linse oder einer Reflektionsfläche erfolgen.

Das Strahlmittel tritt insbesondere aus der Strahlmittelquelle aus und trifft auf das Material. Zwischen der Strahlmittelquelle und dem Material kann eine Fokussierung und/oder ein Umlenkmittel angeordnet sein. Das Umlenkmittel dient zur Umlenkung des Strahlmittels hin zu dem Material. Die Fokussierung kann beweglich in der Bearbeitungsvorrichtung angeordnet sein. Die Fokussierung kann auch zur Auslenkung des Strahlmittels eingesetzt werden. Insbesondere kann durch die Fokussierung eingestellt werden, wo das Strahlmittel auf das Umlenkmittel trifft. Insbesondere kann so auch eine Fokuslage am Material verändert werden.

Das Material ist in einem vorbestimmten Bereich, z. B. entlang einer Linie oder auf einer Fläche, zu bearbeiten. Dieser Bereich ist gegenüber der Strahlmittelquelle oder dem Umlenkmittel auf einer Kreisbahn angeordnet. Die Kreisbahn weist einen Mittelpunkt bzw. eine Drehachse auf, zu dem bzw. der das Material entlang des Bereichs in einem konstanten Abstand bzw. Radius angeordnet ist. Die Anordnung des Materials auf einer Kreisbahn ermöglicht, dass das bei einer Drehung der Strahlmittelquelle oder des Umlenkmittels um den Mittelpunkt der Kreisbahn bzw. um die Drehachse eine gegenüber dem Material konstante Fokuslage des Strahlmittels vorliegt.

Der Bereich erstreckt sich insbesondere über einen Winkelbereich von mindestens 5 Winkelgrad, bevorzugt von mindestens 25 Winkelgrad, besonders bevorzugt von mindestens 60 Winkelgrad oder sogar von mindestens 120 Winkelgrad. Insbesondere erstreckt sich der Bereich über einen Winkelbereich von höchstens 180 Winkelgrad, bevorzugt von höchstens 160 Winkelgrad.

Die Fördereinrichtung kann ein mehrgliedriges Förderband oder Rollen umfassen, die eine Auflage für das Material bilden. Das Material kann auf der Auflage über Unterdruck angeordnet und fixiert werden, wobei das Material durch die Auflage hindurch angesaugt wird. Alternativ oder zusätzlich kann das Material mit einer Anpressvorrichtung an die Auflage angedrückt werden. Dafür kann das Material zwischen der Auflage und einem die Anpressvorrichtung bildenden Bandmaterial angeordnet werden. Die Fördereinrichtung bildet insbesondere eine kreisbogenförmige Auflage für das Material, über die das Material auf der Kreisbahn gegenüber der Strahlmittelquelle bzw. dem Umlenkmittel angeordnet ist.

Insbesondere ist eine Absaugung vorgesehen, die ein bei der Bearbeitung des Materials entstehenden Schmauch aus der Bearbeitungszone absaugen kann. Die Absaugung ist insbesondere bei der Herstellung von Elektrodenblättern erforderlich.

Insbesondere ist das Material durch die Fördereinrichtung entlang einer Förderrichtung gegenüber der Strahlmittelquelle oder dem Umlenkmittel (bzw. einer ortsfesten Umgebung) bewegbar, insbesondere entlang der Kreisbahn oder quer dazu.

Insbesondere kann das Material während der Bearbeitung, also bei in das Material eingekoppeltem Strahlmittel, in einer konstanten Lage festgehalten und nur in Bearbeitungspausen, also bei nicht in das Material eingekoppeltem Strahlmittel, mit einer Vorschubgeschwindigkeit gegenüber der Strahlmittelquelle bzw. dem Umlenkmittel (bzw. einer ortsfesten Umgebung) bewegt werden. Alternativ oder zusätzlich kann das Material auch während der Bearbeitung gegenüber der Strahlmittelquelle bzw. dem Umlenkmittels (bzw. einer ortsfesten Umgebung) mit einer Vorschubgeschwindigkeit bewegt werden. In beiden Fällen kann das Strahlmittel gegenüber dem Material bzw. einer ortsfesten Umgebung bewegt werden. Dabei bleibt die Fokuslage des Strahlmittels gegenüber dem Material konstant.

Insbesondere verläuft die Förderrichtung des Materials entlang der Kreisbahn oder quer zum Verlauf der Kreisbahn.

Insbesondere ist durch eine Bewegung der Strahlmittelquelle oder des Umlenkmittels die Fokuslage des Strahlmittels zumindest entlang der Kreisbahn und ggf. zusätzlich quer zum Verlauf der Kreisbahn bewegbar. Die Bewegung entlang der Kreisbahn wird insbesondere durch eine Drehbewegung der Strahlmittelquelle oder des Umlenkmittels realisiert. Die Bewegung quer zum Verlauf der Kreisbahn wird insbesondere durch eine transversale Bewegung der Strahlmittelquelle oder des Umlenkmittels realisiert. Die Bewegungen entlang der Kreisbahn und quer zum Verlauf der Kreisbahn sind insbesondere miteinander gekoppelt, werden also bevorzugt zumindest teilweise gleichzeitig ausgeführt.

Auch bei während der Bearbeitung entlang einer Förderrichtung bewegtem Material können so Schnittkanten, die quer zur Förderrichtung verlaufen, erzeugt werden.

Insbesondere weist die Bearbeitungsvorrichtung das Umlenkmittel und das Umlenkmittel eine polygone Form bzw. eine Pyramidenform auf. Insbesondere ist das Umlenkmittel drehbar angeordnet. Bei einer Drehung des Umlenkmittels um eine Drehachse, die den Mittelpunkt der Kreisbahn schneidet, kann bei konstanter Lage der Strahlmittelquelle die Fokuslage entlang der Kreisbahn bewegt werden. Wird das Umlenkmittel entlang der Drehachse transversal bewegt, kann diese Transversalbewegung insbesondere mit der Drehbewegung gekoppelt werden, so dass quer zur Förderrichtung des Materials verlaufende Schnittkanten erzeugt werden können.

Es wird ein Verfahren zum Bearbeiten eines Materials mit einem fokussierten Strahlmittel in einer Bearbeitungsvorrichtung, insbesondere in der beschriebenen Bearbeitungsvorrichtung, vorgeschlagen. Die Bearbeitungsvorrichtung umfasst zumindest eine Strahlmittelquelle zur Erzeugung des Strahlmittels sowie eine Fördereinrichtung für das Material. Zusätzlich kann die Bearbeitungsvorrichtung ein Umlenkmittel zur Umlenkung des von der Strahlmittelquelle ausgesendeten Strahlmittels hin zum Material umfassen. Die Fördereinrichtung ist gegenüber der Strahlmittelquelle oder dem Umlenkmittel so angeordnet, dass das Material, zumindest mit einem durch das Strahlmittel zu bearbeitendem Bereich, durch die Fördereinrichtung gegenüber der Strahlmittelquelle oder dem Umlenkmittel auf einer Kreisbahn angeordnet ist. Das Verfahren umfasst zumindest die folgenden Schritte:
a) Anordnen des Materials in der Fördereinrichtung;
b) Bearbeiten des Materials mit dem Strahlmittel, wobei das Material entlang der Kreisbahn mit einer konstanten Fokuslage des Strahlmittels bearbeitet wird.

Insbesondere kann das Material während der Bearbeitung, also bei in das Material eingekoppeltem Strahlmittel, in einer konstanten Lage festgehalten und nur in Bearbeitungspausen, also bei nicht in das Material eingekoppeltem Strahlmittel, mit einer Vorschubgeschwindigkeit gegenüber der Strahlmittelquelle bzw. dem Umlenkmittel (bzw. einer ortsfesten Umgebung) bewegt werden. Alternativ oder zusätzlich kann das Material auch während der Bearbeitung gegenüber der Strahlmittelquelle bzw. dem Umlenkmittels (bzw. einer ortsfesten Umgebung) mit einer Vorschubgeschwindigkeit bewegt werden. In beiden Fällen kann das Strahlmittel gegenüber dem Material bzw. einer ortsfesten Umgebung bewegt werden. Dabei bleibt die Fokuslage des Strahlmittels gegenüber dem Material konstant.

Insbesondere wird das Material zumindest während Schritt b) durch die Fördereinrichtung gegenüber dem Strahlmittel entlang der Kreisbahn oder quer dazu bewegt.

Insbesondere wird während Schritt b) durch eine Bewegung der Strahlmittelquelle oder des Umlenkmittels die Fokuslage des Strahlmittels zumindest entlang der Kreisbahn und zusätzlich quer zum Verlauf der Kreisbahn bewegt.

Insbesondere weist die Bearbeitungsvorrichtung das Umlenkmittel und das Umlenkmittel eine Pyramidenform auf. Während Schritt b) wird durch eine Drehung des Umlenkmittels die Fokuslage des Strahlmittels zumindest entlang der Kreisbahn bewegt, wobei eine Geschwindigkeit der Fokuslage infolge einer Drehgeschwindigkeit des Umlenkmittels größer ist als eine Vorschubgeschwindigkeit des Materials in der Fördereinrichtung.

Insbesondere kann damit die Fokuslage nach Erreichen einer Endposition, also z. B. bei Erreichen eines Endpunktes einer Schnittlinie, auf eine Startposition, also z. B. einen Anfangspunkt einer Schnittlinie, zurückbewegt werden, wobei die Startposition und die Endposition bei aufeinanderfolgenden Bearbeitungsprozessen stets gleichbleiben und z. B. gegenüber der Fördereinrichtung nicht bewegt werden.

Wird die Drehgeschwindigkeit deutlich größer gewählt, kann der gleiche Bereich des Materials in mehreren Überläufen bearbeiten werden, d. h. die Fokuslage wird wiederholt über den gleichen Bereich gefahren. Damit kann ggf. die Schnittqualität erhöht bzw. eine thermische Belastung des Materials verringert werden.

Das Verfahren ist insbesondere durch ein Steuergerät, das zur Durchführung des beschriebenen Verfahrens ausgestattet, konfiguriert oder programmiert ist, durchführbar.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte, insbesondere Schritt b), des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte, insbesondere Schritt b), des vorgeschlagenen Verfahrens auszuführen.

Die Ausführungen zu der Bearbeitungsvorrichtung sind insbesondere auf das Verfahren und das computerimplementierte Verfahren (also den Computer bzw. den Prozessor, das System zur Datenverarbeitung, das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine erste Ausführungsvariante einer Bearbeitungsvorrichtung in einer Seitenansicht sowie ein Detail in einer Ansicht entlang einer Drehachse;
- Fig. 2:: das Detail nach Fig. 2 mit dem Umlenkmittel in einer Startposition;
- Fig. 3:: das Detail nach Fig. 1 und 2 mit dem Umlenkmittel in einer ersten Zwischenposition;
- Fig. 4:: das Detail nach Fig. 1 bis 3 mit dem Umlenkmittel in einer zweiten Zwischenposition;
- Fig. 5:: das Detail nach Fig. 1 bis 4 mit dem Umlenkmittel in einer dritten Zwischenposition;
- Fig. 6:: das Detail nach Fig. 1 bis 5 mit dem Umlenkmittel in einer Endposition;
- Fig. 7:: eine zweite Ausführungsvariante einer Bearbeitungsvorrichtung in einer Seitenansicht; und
- Fig. 8:: ein Detail der Fig. 7 in einer Ansicht entlang einer Drehachse.

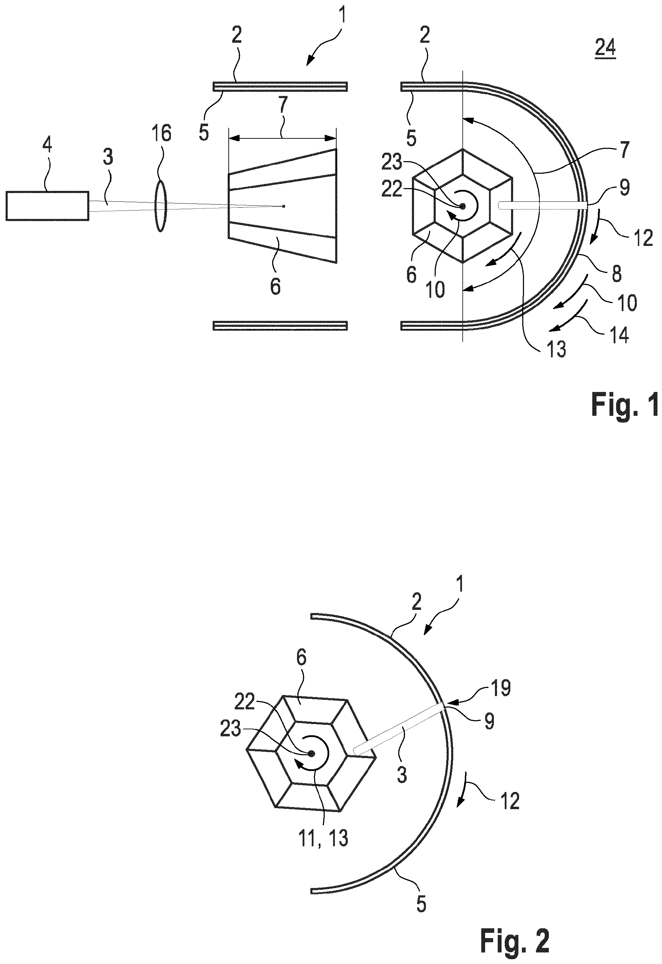

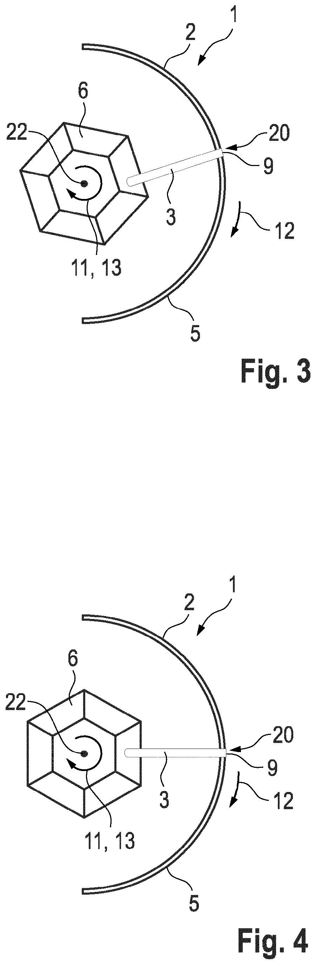

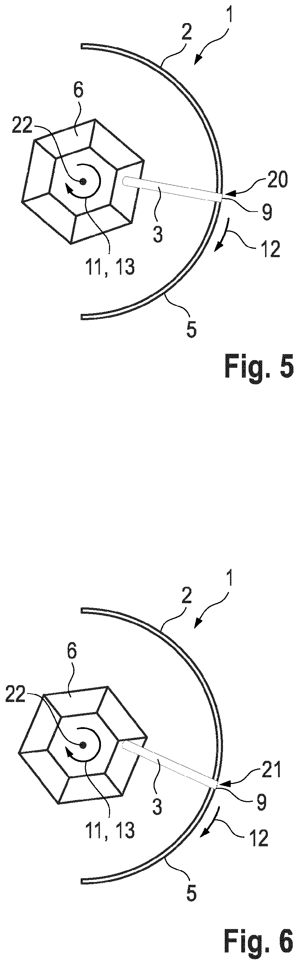

Die Fig. 1 zeigt eine erste Ausführungsvariante einer Bearbeitungsvorrichtung 1 in einer Seitenansicht sowie ein Detail in einer Ansicht entlang einer Drehachse 22. Fig. 2 zeigt das Detail nach Fig. 2 mit dem Umlenkmittel 6 in einer Startposition 19. Fig. 3 zeigt das Detail nach Fig. 1 und 2 mit dem Umlenkmittel 6 in einer ersten Zwischenposition 20. Fig. 4 zeigt das Detail nach Fig. 1 bis 3 mit dem Umlenkmittel 6 in einer zweiten Zwischenposition 20. Fig. 5 zeigt das Detail nach Fig. 1 bis 4 mit dem Umlenkmittel 6 in einer dritten Zwischenposition 20. Fig. 6 zeigt das Detail nach Fig. 1 bis 5 mit dem Umlenkmittel 6 in einer Endposition 21. Die Fig. 1 bis 6 werden im Folgenden gemeinsam beschrieben.

Die Bearbeitungsvorrichtung 1 umfasst eine Strahlmittelquelle 4 zur Erzeugung des Strahlmittels 3 sowie eine Fördereinrichtung 5 für das Material 2. Zusätzlich umfasst die Bearbeitungsvorrichtung 1 ein Umlenkmittel 6 zur Umlenkung des von der Strahlmittelquelle 4 ausgesendeten Strahlmittels 3 hin zum Material 2. Die Strahlmittelquelle 4 kann, wenn kein Umlenkmittel 6 vorgesehen ist, in den dargestellten Figuren das Umlenkmittel 6 ersetzen.

Die Fördereinrichtung 5 ist gegenüber dem Umlenkmittel 6 so angeordnet, dass das Material 2, zumindest mit einem durch das Strahlmittel 3 zu bearbeitendem Bereich 7, durch die Fördereinrichtung 5 gegenüber dem Umlenkmittel 6 auf einer Kreisbahn 8 angeordnet. Damit ist das Material 2 bei Bewegung des Umlenkmittels 6 entlang der Kreisbahn 8 mit einer konstanten Fokuslage 9 des Strahlmittels 3 bearbeitbar.

Das Strahlmittel 3 ist ein Laserstrahl. Das Strahlmittel 3 weist zur Bearbeitung des Materials 2 eine Fokuslage 9, also eine vorbestimmte Lage des Fokus gegenüber dem Material 2, auf. Eine Fokussierung des Strahlmittels 3 erfolgt bei dem Laserstrahl z. B. durch eine optische Fokussierung, z. B. durch eine Fokuslinse 16.

Das Strahlmittel 3 tritt aus der Strahlmittelquelle 4 aus und trifft auf das Material 2. Zwischen der Strahlmittelquelle 4 und dem Material 2 ist eine Fokussierung in Form einer Fokuslinse 16 und ein Umlenkmittel 6 angeordnet. Das Umlenkmittel 6 dient zur Umlenkung des Strahlmittels 3 hin zu dem Material 2. Die Fokuslinse 16 ist ortsfest in der Bearbeitungsvorrichtung 1 angeordnet.

Das Material 2 ist in einem vorbestimmten Bereich 7 entlang einer Linie zu bearbeiten. Dieser Bereich 7 ist gegenüber dem Umlenkmittel 6 auf einer Kreisbahn 8 angeordnet. Die Kreisbahn 8 weist einen Mittelpunkt 23 auf, zu dem das Material 2 entlang des Bereichs 7 in einem konstanten Abstand bzw. Radius angeordnet ist. Die Anordnung des Materials 2 auf einer Kreisbahn 8 ermöglicht, dass das bei einer Drehung 11 des Umlenkmittels 6 um den Mittelpunkt 23 der Kreisbahn 8 bzw. um die Drehachse 22 des Umlenkmittels 6 eine gegenüber dem Material 2 konstante Fokuslage 9 des Strahlmittels 3 vorliegt.

Die Fördereinrichtung 5 bildet eine kreisbogenförmige Auflage für das Material 2. Das Material 2 ist durch die Fördereinrichtung 5 entlang einer Förderrichtung 10 gegenüber dem Umlenkmittel 6 bzw. einer ortsfesten Umgebung 24 bewegbar.

Das Material 2 kann während der Bearbeitung, also bei in das Material 2 eingekoppeltem Strahlmittel 3, in einer konstanten Lage festgehalten und nur in Bearbeitungspausen, also bei nicht in das Material 2 eingekoppeltem Strahlmittel 3, mit einer Vorschubgeschwindigkeit 14 gegenüber dem Umlenkmittel 6 bzw. einer ortsfesten Umgebung 24 bewegt werden. Alternativ oder zusätzlich kann das Material 2 auch während der Bearbeitung gegenüber dem Umlenkmittel 6 bzw. einer ortsfesten Umgebung 24 mit einer Vorschubgeschwindigkeit 14 bewegt werden. In beiden Fällen kann das Strahlmittel 3 gegenüber dem Material 2 bzw. einer ortsfesten Umgebung 24 bewegt werden. Dabei bleibt die Fokuslage 9 des Strahlmittels 3 gegenüber dem Material 2 konstant.

Die Förderrichtung 10 des Materials 2 kann entlang der Kreisbahn 8 oder quer zum Verlauf der Kreisbahn 8 verlaufen.

Durch eine Bewegung des Umlenkmittels 6 ist die Fokuslage 9 des Strahlmittels 3 zumindest entlang der Kreisbahn 8 bewegbar. Die Bewegung entlang der Kreisbahn 8 wird durch eine Drehung 11 des Umlenkmittels 6 realisiert.

Das Umlenkmittel 6 weist eine polygone Form bzw. eine Pyramidenform auf. Das Umlenkmittel 6 ist um eine Drehachse 22 drehbar angeordnet. Bei einer Drehung 11 des Umlenkmittels 6 um eine Drehachse 22, die den Mittelpunkt 23 der Kreisbahn 8 schneidet, kann bei konstanter Lage der Strahlmittelquelle 4 die Fokuslage 9 entlang der Kreisbahn 8 bewegt werden.

Während der Bearbeitung des Materials 2 kann durch eine Drehung 11 des Umlenkmittels 6 die Fokuslage 9 des Strahlmittels 3 entlang der Kreisbahn 8 bewegt werden, wobei eine Geschwindigkeit der Fokuslage 9 infolge einer Drehgeschwindigkeit 13 des Umlenkmittels 6 bevorzugt größer ist als eine Vorschubgeschwindigkeit 14 des Materials 2 in der Förderrichtung 10.

Damit kann die Fokuslage 9 nach Erreichen einer Endposition 21 (siehe Fig. 6, also z. B. bei Erreichen eines Endpunktes einer Schnittlinie) auf eine Startposition 19 (siehe Fig. 2, also z. B. einen Anfangspunkt einer Schnittlinie) zurückbewegt werden, wobei die Startposition 19 und die Endposition 21 bei aufeinanderfolgenden Bearbeitungsprozessen stets gleichbleiben und z. B. gegenüber der Fördereinrichtung 5 nicht bewegt werden.

Wird die Drehgeschwindigkeit 13 deutlich größer gewählt, kann der gleiche Bereich 7 des Materials 2 in mehreren Überläufen bearbeiten werden, d. h. die Fokuslage 9 wird wiederholt über den gleichen Bereich 7 gefahren. Damit kann ggf. die Schnittqualität erhöht bzw. eine thermische Belastung des Materials 2 verringert werden.

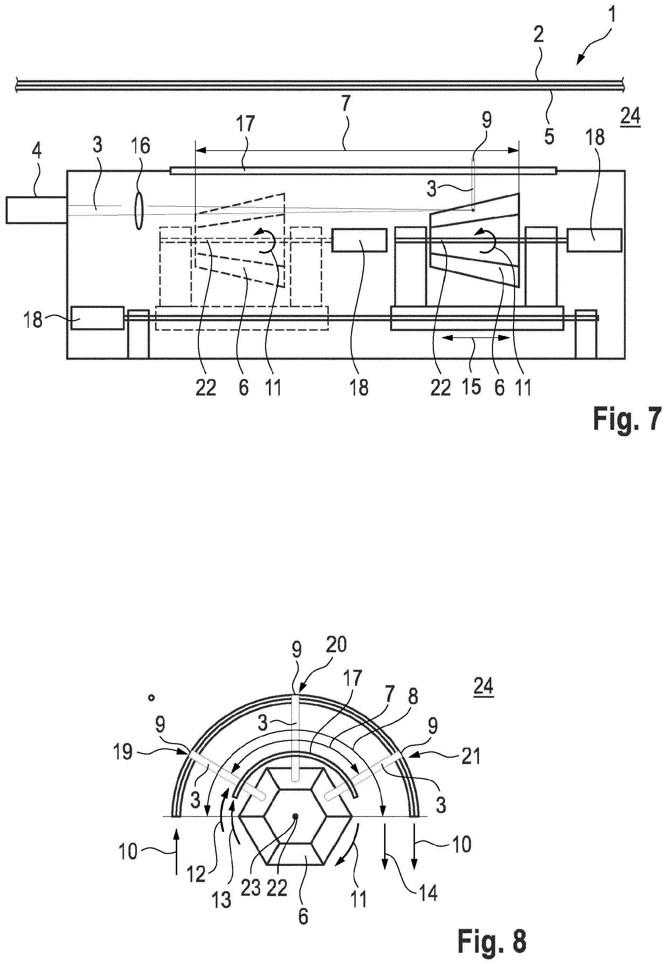

Fig. 7 zeigt eine zweite Ausführungsvariante einer Bearbeitungsvorrichtung 1 in einer Seitenansicht. Fig. 8 zeigt ein Detail der Fig. 7 in einer Ansicht entlang einer Drehachse 22. Die Fig. 7 und 8 werden im Folgenden gemeinsam beschrieben. Auf die Ausführungen zu den Fig. 1 bis 6 wird verwiesen.

Die Bearbeitungsvorrichtung 1 umfasst eine Strahlmittelquelle 4 zur Erzeugung des Strahlmittels 3 sowie eine Fördereinrichtung 5 für das Material 2. Zusätzlich umfasst die Bearbeitungsvorrichtung 1 ein Umlenkmittel 6 zur Umlenkung des von der Strahlmittelquelle 4 ausgesendeten Strahlmittels 3 hin zum Material 2.

Das Umlenkmittel 6 kann entlang einer transversalen Richtung eine Transversalbewegung 15 durchführen (siehe die zwei dargestellten Positionen des Umlenkmittels 6). Weiter kann das Umlenkmittel 6 um die Drehachse 22 eine Drehung 11 ausführen. Durch eine Bewegung des Umlenkmittels 6 ist die Fokuslage 9 des Strahlmittels 3 entlang der Kreisbahn 8 (siehe Fig. 8) und zusätzlich quer zum Verlauf der Kreisbahn 8 (siehe Fig. 7) bewegbar. Die Bewegung entlang der Kreisbahn 8 wird durch eine Drehung 11 des Umlenkmittels 6 realisiert. Die Bewegung quer zum Verlauf der Kreisbahn 8 wird durch eine Transversalbewegung 15 des Umlenkmittels 6 realisiert. Die Bewegungen entlang der Kreisbahn 8 und quer zum Verlauf der Kreisbahn 8 sind miteinander gekoppelt, können also zumindest teilweise gleichzeitig ausgeführt werden.

Damit können, auch bei während der Bearbeitung entlang einer Förderrichtung 10 bewegtem Material 2, Schnittkanten, die quer zur Förderrichtung 10 verlaufen, erzeugt werden.

Das Umlenkmittel 6 wird über unterschiedliche Motoren 18 bewegt. Zwischen Material 2 und Umlenkmittel 6 ist ein Schutzglas 17 angeordnet, dass sich ebenfalls kreisbogenförmig um den Mittelpunkt 23 bzw. die Drehachse 22 erstreckt.

In Fig. 8 ist eine Startposition 19, die Zwischenpositionen 20 und die Endposition 21 des Strahlmittels 3 dargestellt. Zum Erreichen der unterschiedlichen Positionen 19, 20, 21 führt das Umlenkmittel 6 eine Drehung 11 um die Drehachse 22 des Umlenkmittels 6 bzw. um den Mittelpunkt 23 der Kreisbahn 8 aus.

### Bezugszeichenliste

- 1: Bearbeitungsvorrichtung
- 2: Material
- 3: Strahlmittel
- 4: Strahlmittelquelle
- 5: Fördereinrichtung
- 6: Umlenkmittel
- 7: Bereich
- 8: Kreisbahn
- 9: Fokuslage
- 10: Förderrichtung
- 11: Drehung
- 12: Geschwindigkeit
- 13: Drehgeschwindigkeit
- 14: Vorschubgeschwindigkeit
- 15: Transversalbewegung
- 16: Fokuslinse
- 17: Schutzglas
- 18: Motor
- 19: Startposition
- 20: Zwischenposition
- 21: Endposition
- 22: Drehachse
- 23: Mittelpunkt
- 24: Umgebung

## Patentansprüche

1. Bearbeitungsvorrichtung (1), zum Bearbeiten eines Materials (2) mit einem fokussierten Strahlmittel (3), zumindest umfassend eine Strahlmittelquelle (4) zur Erzeugung des Strahlmittels (3) sowie eine Fördereinrichtung (5) für das Material (2), oder zusätzlich ein Umlenkmittel (6) zur Umlenkung des von der Strahlmittelquelle (4) ausgesendeten Strahlmittels (3) hin zum Material (2); wobei die Fördereinrichtung (5) gegenüber der Strahlmittelquelle (4) oder dem Umlenkmittel (6) so angeordnet ist, dass das Material (2), zumindest mit einem durch das Strahlmittel (3) zu bearbeitenden Bereich (7), durch die Fördereinrichtung (5) gegenüber der Strahlmittelquelle (4) oder dem Umlenkmittel (6) auf einer Kreisbahn (8) angeordnet ist, so dass das Material (2), bei Bewegung der Strahlmittelquelle (4) oder des Umlenkmittels (6), entlang der Kreisbahn (8) mit einer konstanten Fokuslage (9) des Strahlmittels (3) bearbeitbar ist.

2. Bearbeitungsvorrichtung (1) nach Patentanspruch 1, wobei das Material (2) durch die Fördereinrichtung (5) entlang einer Förderrichtung (10) gegenüber der Strahlmittelquelle (4) oder dem Umlenkmittel (6) bewegbar ist.

3. Bearbeitungsvorrichtung (1) nach Patentanspruch 2, wobei die Förderrichtung (10) entlang der Kreisbahn (8) oder quer zum Verlauf der Kreisbahn (8) verläuft.

4. Bearbeitungsvorrichtung (1) nach einem der vorhergehenden Patentansprüche, wobei durch eine Bewegung der Strahlmittelquelle (4) oder des Umlenkmittels (6) die Fokuslage (9) des Strahlmittels (3) zumindest entlang der Kreisbahn (9) und zusätzlich quer zum Verlauf der Kreisbahn (9) bewegbar ist.

5. Bearbeitungsvorrichtung (1) nach einem der vorhergehenden Patentansprüche, wobei das Strahlmittel (3) ein Laserstrahl ist.

6. Bearbeitungsvorrichtung (1) nach einem der vorhergehenden Patentansprüche, wobei die Bearbeitungsvorrichtung (1) das Umlenkmittel (6) aufweist und das Umlenkmittel (6) eine Pyramidenform aufweist.

7. Verfahren zum Bearbeiten eines Materials (2) mit einem fokussierten Strahlmittel (3) in einer Bearbeitungsvorrichtung (1), die zumindest eine Strahlmittelquelle (4) zur Erzeugung des Strahlmittels (3) sowie eine Fördereinrichtung (5) für das Material (2), oder zusätzlich ein Umlenkmittel (6) zur Umlenkung des von der Strahlmittelquelle (4) ausgesendeten Strahlmittels (3) hin zum Material (2), umfasst; wobei die Fördereinrichtung (5) gegenüber der Strahlmittelquelle (4) oder dem Umlenkmittel (6) so angeordnet ist, dass das Material (2), zumindest mit einem durch das Strahlmittel (3) zu bearbeitenden Bereich (7), durch die Fördereinrichtung (5) gegenüber der Strahlmittelquelle (4) oder dem Umlenkmittel (6) auf einer Kreisbahn (8) angeordnet ist; wobei das Verfahren zumindest die folgenden Schritte umfasst:
c) Anordnen des Materials (2) in der Fördereinrichtung (5);
d) Bearbeiten des Materials (2) mit dem Strahlmittel (3), wobei das Material (2) entlang der Kreisbahn (8) mit einer konstanten Fokuslage (9) des Strahlmittels (3) bearbeitet wird.

8. Verfahren nach Patentanspruch 6, wobei das Material (2) zumindest während Schritt b) durch die Fördereinrichtung (5) gegenüber dem Strahlmittel (3) entlang der Kreisbahn (8) oder quer dazu bewegt wird.

9. Verfahren nach einem der vorhergehenden Patentansprüche 6 und 7, wobei während Schritt b) durch eine Bewegung der Strahlmittelquelle (4) oder des Umlenkmittels (6) die Fokuslage (9) des Strahlmittels (3) zumindest entlang der Kreisbahn (9) und zusätzlich quer zum Verlauf der Kreisbahn (9) bewegt wird.

10. Verfahren nach einem der vorhergehenden Patentansprüche 6 bis 9, wobei die Bearbeitungsvorrichtung (1) das Umlenkmittel (6) aufweist und das Umlenkmittel (6) eine Pyramidenform aufweist, wobei während Schritt b) durch eine Drehung (11) des Umlenkmittels (6) die Fokuslage (9) des Strahlmittels (3) zumindest entlang der Kreisbahn (9) bewegt wird, wobei eine Geschwindigkeit (12) der Fokuslage (9) infolge einer Drehgeschwindigkeit (13) des Umlenkmittels (6) größer ist als eine Vorschubgeschwindigkeit (14) des Materials (2) in der Fördereinrichtung (5).
